# EUROPEAN PATENT APPLICATION

(11) **EP 3 916 614 A1**
(43) Date of publication of application: **01.12.2021**
(21) Application number: 21163250.0
(22) Date of filing: 17.03.2021
(51) Int. Cl.: G06F 40/30, G06F 40/284

(54) **METHOD AND APPARATUS FOR TRAINING LANGUAGE MODEL, ELECTRONIC DEVICE, READABLE STORAGE MEDIUM AND COMPUTER PROGRAM PRODUCT**

(30) Priority: 29.05.2020 CN 202010479744
(71) Applicant: Beijing Baidu Netcom Science and Technology Co., Ltd., Beijing 100085 (CN)
(72) Inventor: LI, Yukun, Beijing, Beijing 100085 (CN); LI, Zhen, Beijing, Beijing 100085 (CN); SUN, Yu, Beijing, Beijing 100085 (CN)
(74) Representative: dompatent von Kreisler Selting Werner - Partnerschaft von Patent- und Rechtsanwälten mbB

(57) **Abstract**

A method and apparatus for training a language model, an electronic device, a readable storage medium and a computer program product, which relate to the field of natural language processing technologies in artificial intelligence, are disclosed. The method may include pre-training the language model using preset text language materials in a corpus; replacing at least one word in a sample text language material with a word mask respectively to obtain a sample text language material including at least one word mask; inputting the sample text language material including the at least one word mask into the language model, and outputting a context vector of each of the at least one word mask via the language model; determining a word vector corresponding to each word mask based on the context vector of the word mask and a word vector parameter matrix; and training the language model based on the word vector corresponding to each word mask. Introduction of semantic information representation with greater granularity enhances the capacity of the language model to learn word meaning information and may effectively avoid an information leakage risk possibly caused by character-based full word coverage.

## Description

### TECHNICAL FIELD

The present disclosure relates to the field of computer technologies, and particularly to a natural language processing technology in artificial intelligence (AI), and in particular, to a method and apparatus for training a language model, an electronic device, a readable storage medium and a computer program product.

### BACKGROUND

In the field of natural language processing (NLP) of Chinese, a self-supervised pre-training process of a language model is performed using a large amount of unsupervised text, and then, parameters of the language model are finely tuned using supervised task data, which is an advanced language-model training technology in the field of NLP.

In the existing art, in order to prevent the training effect of the language model from being influenced by the performance of a word segmenter, the self-supervised pre-training process of the language model is performed based on character granularity, such that it is difficult for the language model to learn information with greater semantic granularity (for example, words), an information leakage risk may exist, and the process of learning the semantics of the words by the language model may be damaged, thereby influencing the prediction performance of the language model.

### SUMMARY

Various aspects of the present application provide a method and apparatus for training a language model, an electronic device and a readable storage medium, so as to enhance the capacity of the language model to learn word meaning information, and avoid an information leakage risk caused by a learning process based on character granularity.

According to a first aspect, there is provided a method for training a language model, including:
pre-training the language model using preset text language materials in a corpus;
replacing at least one word in a sample text language material with a word mask respectively to obtain a sample text language material including at least one word mask;
inputting the sample text language material including the at least one word mask into the language model, and outputting by the language model a context vector of each of the at least one word mask;
determining a word vector corresponding to each word mask based on the context vector of the word mask and a word vector parameter matrix; and
training the language model based on the word vector corresponding to each word mask until a preset training completion condition is met.

According to a second aspect, there is provided an apparatus for training a language model, including:
a pre-training unit configured to pre-train the language model using preset text language materials in a corpus;
a replacing unit configured to replace at least one word included in at least one sample text language material with a word mask respectively to obtain a sample text language material including at least one word mask;
the language model configured to receive the sample text language material including the word mask, and output a context vector of each of the at least one word mask;
a determining unit configured to determine a word vector corresponding to each word mask based on the context vector of the word mask and a word vector parameter matrix; and
a training unit configured to train the language model based on the word vector corresponding to each word mask until a preset training completion condition is met.

According to a third aspect, there is provided an electronic device, including:
at least one processor; and
a memory connected with the at least one processor communicatively;
wherein the memory stores instructions executable by the at least one processor to cause the at least one processor to perform the method of the aspect as described above and any possible implementation.

According to a fourth aspect, there is provided a non-transitory computer-readable storage medium including instructions, which, when executed by a computer, cause the computer to carry out the method of the aspect as described above and any possible implementation.

According to a fifth aspect, there is provided a computer program product including instructions which, when the program is executed by a computer, cause the computer to carry out the method of the aspect as described above and any possible implementation.

From the above-mentioned technical solution of embodiments of the present application, the language model is pre-trained using the preset text language materials in the corpus, the at least one word in the sample text language material is then replaced with the word mask respectively to obtain the sample text language material including the at least one word mask, the sample text language material including the at least one word mask is input into the language model, the context vector of each of the at least one word mask is output via the language model, the word vector corresponding to each word mask is determined based on the context vector of the word mask and the word vector parameter matrix, and the language model is trained based on the word vector corresponding to each word mask until the preset training completion condition is met, such that the trained language model may be obtained. Semantic information representation with greater granularity is introduced, the word vectors contain richer semantic information representation compared with character vectors, and the word vectors are modeled based on contexts, thus enhancing the process of modeling the word meaning information by the language model and the capacity of the language model to learn the word meaning information.

In addition, with the technical solution of the present application, since the word in the sample text language material is replaced with the word mask to train the language model, the information leakage risk possibly caused by character-based full word coverage may be avoided effectively.

In addition, with the technical solution of the present application, the prediction performance of the language model may be improved effectively.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

In order to more clearly explain the technical solutions of the embodiments of the present application, the drawings to be used in the descriptions of the embodiments or the existing art are briefly introduced as follows. Apparently, the following drawings illustrate some embodiments of the present application, and a person skilled in the art can obtain other drawings from these drawings without any creative effort. The drawings are only used for better understanding the present solution and do not constitute a limitation of the present application. In the drawings:
Fig. 1 is a schematic diagram according to a first embodiment of the present application;
Fig. 2 is a schematic diagram according to a second embodiment of the present application;
Fig. 3 is a schematic diagram according to a third embodiment of the present application;
Fig. 4 is a schematic diagram according to a fourth embodiment of the present application; and
Fig. 5 is a schematic diagram of an electronic device for implementing a method for training a language model according to the embodiments of the present application.

### DETAILED DESCRIPTION OF EMBODIMENTS

The following part will illustrate exemplary embodiments of the present application with reference to the figures, including various details of the embodiments of the present application for a better understanding. The embodiments should be regarded only as exemplary ones. Therefore, those skilled in the art should appreciate that various changes or modifications can be made with respect the embodiments described herein without departing from the scope and spirit of the present application. Similarly, for clarity and conciseness, the descriptions of the known functions and structures are omitted in the descriptions below.

Apparently, the embodiments to be described are merely a part rather than all of the embodiments of the present application. All other embodiments obtained by a person of ordinary skill in the art based on the embodiments of the present application without creative efforts shall fall within the protection scope of the present application.

It should be noted that a terminal in the embodiments of the present application may include, but is not limited to, a mobile phone, a personal digital assistant (PDA), a wireless handheld device, a tablet computer, a personal computer (PC), an MP3 player, an MP4 player, a wearable device (for example, smart glasses, smart watches, smart bracelets, or the like), a smart home device, and other smart devices.

In addition, the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects before and after have a relationship of "or".

In the existing art, the self-supervised pre-training process of a language model is performed based on character granularity, such that it is difficult for the language model to learn information with greater semantic granularity (for example, words), an information leakage risk may exist, and the process of learning the semantics of words by the language model may be damaged, thereby influencing the prediction performance of the language model.

For example, in the pre-training process of an enhanced representation from knowledge Integration (ERNIE) model in an existing language model, the ERNIE model learns the expression of entities by means of character-based whole word mask. However, the character-based whole word mask method still does not explicitly introduce information with greater semantic granularity, for example, word vectors; in addition, an information leakage risk may exist; for example, for a text " 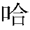 (ha) 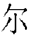 (er) 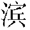 (bin) 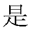 (shi) 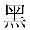 (hei) 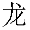 (long) 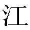 (jiang) 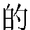 (de) 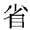 (sheng) 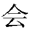 (hui) (which means in English: HarBin is the provincial capital of Heilongjiang province", the characters " 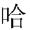 (ha)", " 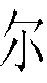 (er)" and " 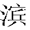 (bin)" are replaced by three masks respectively to obtain "[mask][mask][mask] 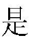 (shi) 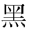 (hei) 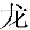 (long) 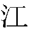 (jiang) 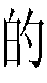 (de) 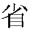 (sheng) 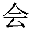 (hui)", and the ERNIE model is expected to learn that three [mask]s correspond to the three characters" 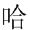 (ha)", " 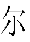 (er)" and " 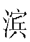 (bin)" respectively, which is equivalent to informing the ERNIE model in advance that information to be predicted consists of three characters, and such information may destroy the process of learning the semantics of the words by the model.

In order to solve the above-mentioned problems, the present application provides a method and apparatus for training a language model, an electronic device and a readable storage medium, so as to enhance the capacity of the language model to learn word meaning information, and avoid an information leakage risk caused by a learning process based on character granularity.

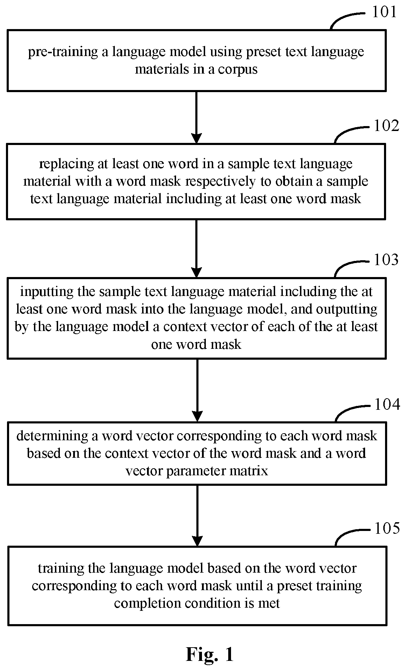

Fig. 1 is a schematic diagram according to a first embodiment of the present application. Description is given below with reference to Fig. 1.

101: pre-training the language model using preset text language materials in a corpus.

The pre-training the language model using the preset text language materials in the corpus enables the language model to learn words, entities and entity relationships in the text language materials.

102: replacing at least one word in a sample text language material with a word mask respectively to obtain a sample text language material including at least one word mask.

The sample text language material may be one of the preset text language materials in the corpus, or another text language material different from the preset text language materials in the corpus.

Optionally, in a possible implementation of this embodiment, when the at least one word in the sample text language material is replaced with the word mask respectively, a context of the word mask is still represented based on characters.

103: inputting the sample text language material including the at least one word mask into the language model, and outputting by the language model a context vector of each of the at least one word mask.

104: determining a word vector corresponding to each word mask based on the context vector of the word mask and a word vector parameter matrix.

105: training the language model based on the word vector corresponding to each word mask until a preset training completion condition is met.

The above-mentioned 102-105 may be an iterative execution process, the language model is trained by executing 102-105 iteratively, and when the preset training completion condition is met, the training process of the language model is completed.

Optionally, in a possible implementation of this embodiment, the preset training completion condition may be set according to an actual requirement, and for example, may include: the perplexity of the word vector output by the language model corresponding to the sample text language material reaches a first preset threshold; and/or the number of training times (i.e., the number of iterative execution times of 101-104) of the language model reaches a second preset threshold.

It should be noted that part or all of execution subjects of 101-105 may be configured as an application located at a local terminal, or a functional unit, such as a plug-in or software development kit (SDK) provided in the application located at the local terminal, or the like, or a processing engine located at a network-side server, which is not particularly limited in this embodiment.

It may be understood that the application may be configured as a native application (nativeApp) installed at the terminal, or a web application (webApp) of a browser at the terminal, which is not limited in this embodiment.

For example, in an example, the language model is pre-trained using the preset text language materials in the corpus, " " 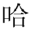 (ha) 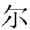 (er) 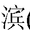 (bin)" 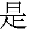 " 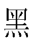 (hei) 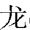 (long) 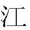 (jiang)" 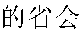 (which means in English: "Harbin" is the provincial capital of "Heilongjiang")", and "" 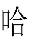 (ha) 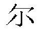 (er) 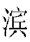 (bin)" 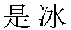 (bing) 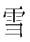 (xue) 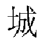 (cheng) 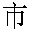 (shi)(which means in English: "Harbin" is an icy and snowy city)" are learned, the " 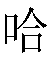 (ha) 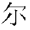 (er) 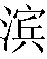 (bin)" in the sample text language material " 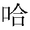 (ha) 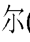 (er) 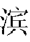 (bing) 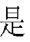 (shi) 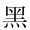 (hei) 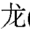 (long) 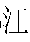 (jiang) 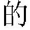 (de) 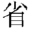 (sheng) 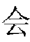 (hui)" is replaced by a word mask input into the language model, a word vector is output via the language model, and the language model is trained based on whether the word vector output by the language model is correct or not, such that after the training process is completed, the language model may correctly output the word vector of the " 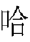 (ha) 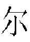 (er) 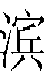 (bin)" when "[mask] 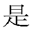 (shi) 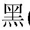 (hei) 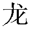 (long) 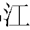 (jiang) 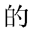 (de) 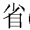 (sheng) 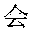 (hui)" is input into the language model.

In this embodiment, the language model is pre-trained using the preset text language materials in the corpus, at least one word in the sample text language material is then replaced with a word mask respectively to obtain the sample text language material including the at least one word mask, the sample text language material including the at least one word mask is input into the language model, the context vector of each of the at least one word mask is output via the language model, the word vector corresponding to each word mask is determined based on the context vector of the word mask and the word vector parameter matrix, and the language model is trained based on the word vector corresponding to each word mask until the preset training completion condition is met, such that the trained language model may be obtained. Since semantic information representation with greater granularity is introduced, the word vectors contain richer semantic information representation compared with character vectors, and when the word vectors are modeled based on contexts, the process of modeling the word meaning information by the language model is enhanced, and the capacity of the language model to learn the word meaning information is enhanced.

In addition, with the technical solution of the present application, since the word in the sample text language material is replaced with the word mask to train the language model, the information leakage risk possibly caused by character-based full word coverage may be avoided effectively.

In addition, with the technical solution of the present application, the prediction performance of the language model may be improved effectively.

Optionally, in a possible implementation of this embodiment, in 102, word segmentation may be performed on the sample text language material, and each of the at least one word in the sample text language material may be replaced with one word mask based on the word segmentation result. The context of the word mask is still represented based on characters in the sample text language material except for the word replaced with the mask.

In this implementation, word segmentation is performed on the sample text language material, the words in the sample text language material may be accurately determined according to the word segmentation result, and each of one or more of the words may be replaced respectively by one word mask, such that one or more word masks may be correctly set for training the language model, the word vectors are modeled based on contexts by the language model, the process of modeling word meaning information by the language model is enhanced, and the capacity of the language model to learn the word meaning information is enhanced.

Optionally, in a possible implementation of this embodiment, in 104, the context vector of each word mask may be multiplied by the word vector parameter matrix to obtain probability values of the word mask corresponding to the plural word vectors; then, the probability values of the word mask corresponding to the plural word vectors are normalized, for example, by a normalization index function (softmax), so as to obtain a plurality of normalized probability values of the word mask corresponding to the plurality of word vectors, and then, the word vector corresponding to the word mask is determined based on the plurality of normalized probability values of the word mask corresponding to the plurality of word vectors; specifically, the word vector with the highest normalized probability value is determined as the word vector corresponding to the word vector. When the probability values of each word mask corresponding to the plural word vectors are normalized by softmax, the word vector parameter matrix may also be referred to as a softmax parameter matrix or softmax word vector parameter matrix.

In an implementation, possible words may be included in a vocabulary, the word vector parameter matrix includes specific representation of a plurality of word vectors, the word vectors in the word vector parameter matrix are specific representation of word vectors of the words in the vocabulary, matrix multiplication is performed on the context vector of each word mask and the word vector parameter matrix to obtain the relevance between the context vector of the word mask and each word vector in the word vector parameter matrix, thereby obtaining a probability value of the word mask corresponding to each word vector in the vocabulary; each probability value represents the probability that the word mask corresponds to one word vector.

In this implementation, the context vector of the word mask is multiplied by the word vector parameter matrix, the obtained probability values are normalized, and for example, based on the normalized probability values, the word vector with the highest probability value may be selected as the word vector corresponding to the word mask, thereby determining the word vector corresponding to the word mask.

Optionally, in a possible implementation of this embodiment, the word vector parameter matrix in 104 may be configured as a pre-trained word vector parameter matrix, or an initialized word vector parameter matrix (i.e., an untrained word vector parameter matrix or a word vector parameter matrix which is not trained completely), the dimension of the word vector parameter matrix may be [dimension of word vector, size of vocabulary], and the size of the vocabulary is the number of the words contained in the vocabulary, which is not limited in this embodiment of the present application.

When the word vector parameter matrix is a pre-trained word vector parameter matrix, the training speed of the language model may be expedited, thereby improving the training efficiency.

In a specific implementation, when the word vector parameter matrix in 104 is an initialized word vector parameter matrix, in 105, the language model and the initialized word vector parameter matrix may be trained jointly based on the word vector corresponding to each word mask until the preset training completion condition is met; for example, the method according to the embodiment of the present application is executed using a plurality of sample text language materials, the words replaced with the word masks in the plurality of sample text language materials include a plurality of words (which may be partial or all words) in the vocabulary, and based on the above-mentioned embodiment, after the plurality of normalized probability values of each word mask corresponding to the plurality of word vectors are obtained, with maximization of the normalized probability values of all the word masks participating in the training process as a target, the word vector of each of all the word masks and representation of each word vector in the word vector parameter matrix are determined to obtain the trained word vector parameter matrix, the word vector of each word in the vocabulary may be represented accurately, and therefore, the trained word vector parameter matrix serves as an overall word vector.

In this implementation, when the initialized word vector parameter matrix is adopted, the joint training process of the language model and the initialized word vector parameter matrix may expedite the convergence speed of the language model and the word vector, thereby improving the training effect.

Optionally, in a possible implementation of this embodiment, the language model in the above-mentioned embodiment of the present application may be configured as any language model, for example, an ERNIE model.

The ERNIE model may learn the semantic representation of a complete concept by modeling prior semantic knowledge, such as entity concepts in mass data, or the like, and is pre-trained by masking semantic units, such as words and the entity concepts, or the like, such that the representation of semantic knowledge units by the ERNIE model is closer to the real world, and the ERNIE model directly models the prior semantic knowledge units while performing the modeling process based on character feature input, and has a strong semantic representation capability. In this embodiment, the ERNIE model is used as the language model, and the strong semantic representation capability of the ERNIE model may be used to model the words, the entities and the entity relationships in the mass data and learn the semantic knowledge of the real world, thereby enhancing the semantic representation capability of the model; for example, by learning the representation of the words and the entities, the ERNIE model is able to model the relationship between " 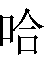 (ha) 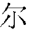 (er) 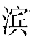 " and " 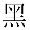 (hei) 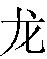 (long) 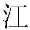 (jiang)" and learns " 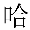 (ha) 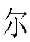 (er) 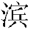 (bin) 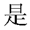 (shi) 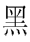 hei)(long) (jiang) 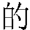 (de) 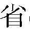 (sheng) 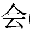 (hui) (which means in English: Harbin is the provincial capital of Heilongjiang" and " 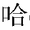 (ha) 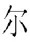 (er) 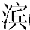 (bin) 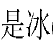 "(bing) 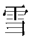 (xue) 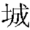 (cheng) 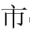 (chi) (which means in English: Harbin is an icy and snowy city) ".

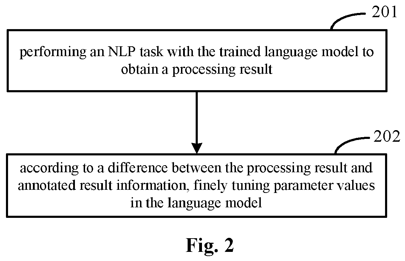

Fig. 2 is a schematic diagram according to a second embodiment of the present application. Description is given as follows with reference to Fig. 2.

On the basis of the above-mentioned embodiment, after the trained language model is obtained when the preset training completion condition is met, the language model may be further optimized with a supervised NLP task, so as to further improve the prediction performance of the language model in the NLP task.

In the second embodiment, the optimization of the language model with the supervised NLP task may include the following steps:
201: performing the NLP task with the trained language model to obtain a processing result.

Optionally, in a possible implementation of this embodiment, the NLP task may be any one or more of NLP tasks, such as classification, matching, sequence annotation, or the like, which is not particularly limited in this embodiment. Correspondingly, the processing result is a processing result of the specific NLP task, for example, a classification result, a matching result, a sequence annotation result, or the like.

Optionally, in a possible implementation of this embodiment, in 201, the NLP task may be performed specifically by using the trained language model in conjunction with other network models for implementing classification, matching and sequence annotation, for example, a convolutional neural network (CNN), a long short term memory (LSTM) model and a bag of word (BOW) model, so as to obtain the processing result; for example, the other network models for implementing classification, matching and sequence annotation may perform these processing tasks based on the output of the language model, so as to obtain the corresponding classification result, the corresponding matching result, the corresponding sequence annotation result and other processing results.

202: according to a difference between the processing result and annotated result information, finely tuning parameter values in the language model until a preset condition is met, for example, the difference between the processing result and the annotated result information being smaller than a preset difference, and/or the number of training times of the language model reaching a preset number of times.

The annotated result information is a correct processing result which is manually annotated in advance for the NLP task to be performed.

In this embodiment, since the word vector parameter matrix is not required, the language model may be further optimized with the NLP task with supervision data (i.e., the annotated result information) without changing the overall structure of the language model, thus improving the prediction performance of the language model, and facilitating iterative optimization of the language model according to each NLP task.

It should be noted that for simplicity of description, the above-mentioned embodiments of the method are described as combinations of a series of acts, but those skilled in the art should understand that the present application is not limited by the described order of acts, as some steps may be performed in other orders or simultaneously according to the present application. Further, those skilled in the art should also understand that the embodiments described in this specification are preferred embodiments and that acts and modules referred to are not necessary for the present application.

In the above-mentioned embodiments, the descriptions of the respective embodiments have respective emphasis, and for parts that are not described in detail in a certain embodiment, reference may be made to the related descriptions of other embodiments.

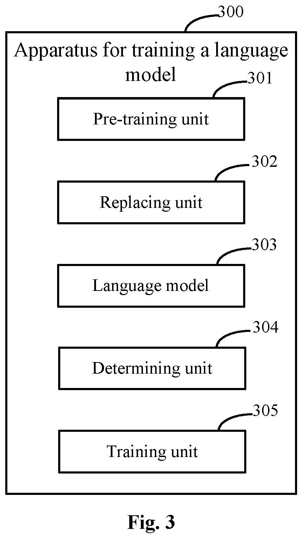

Fig. 3 is a schematic diagram according to a third embodiment of the present application. An apparatus 300 for training a language model according to this embodiment may include: a pre-training unit 301 configured to pre-train the language model using preset text language materials in a corpus; a replacing unit 302 configured to replace at least one word included in at least one sample text language material with a word mask respectively to obtain a sample text language material including at least one word mask; the language model 303 configured to receive the sample text language material including the word mask, and output a context vector of each of the at least one word mask; a determining unit 304 configured to determine a word vector corresponding to each word mask based on the context vector of the word mask and a word vector parameter matrix; and a training unit 305 configured to train the language model based on the word vector corresponding to each word mask until a preset training completion condition is met.

It should be noted that part or all of execution subjects of the training apparatus for the language model according to this embodiment may be configured as an application located at a local terminal, or a functional unit, such as a plug-in or software development kit (SDK) provided in the application located at the local terminal, or the like, or a processing engine located at a network-side server, which is not particularly limited in this embodiment.

It may be understood that the application may be configured as a native application (nativeApp) installed at the terminal, or a web application (webApp) of a browser at the terminal, which is not limited in this embodiment.

In this embodiment, semantic information representation with greater granularity is introduced, the word vectors contain richer semantic information representation compared with character vectors, and the word vectors are modeled directly based on contexts, thus enhancing the process of modeling the word meaning information by the language model and the capacity of the language model to learn the word meaning information.

In addition, with the technical solution of the present application, since the word in the sample text language material is replaced with the word mask to train the language model, the information leakage risk possibly caused by character-based full word coverage may be avoided effectively.

In addition, with the technical solution of the present application, the prediction performance of the language model may be improved effectively.

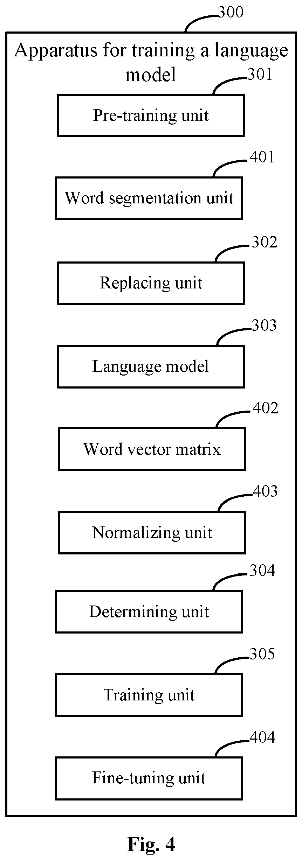

Fig. 4 is a schematic diagram according to a fourth embodiment of the present application, and as shown in Fig. 4, on the basis of the embodiment shown in Fig. 3, the apparatus 300 for training a language model according to this embodiment may further include a word segmentation unit 401 configured to perform word segmentation on the sample text language material. Correspondingly, in this embodiment, the replacing unit 302 is specifically configured to replace each of the at least one word in the sample text language material with one word mask based on the word segmentation result obtained by the word segmentation unit.

Optionally, referring to Fig. 4 again, in a possible implementation of this embodiment, the apparatus 300 for training a language model according to the above-mentioned embodiment may further include: the word vector parameter matrix 402 configured to be multiplied by the context vector of each word mask to obtain probability values of the word mask corresponding to the plural word vectors; and a normalizing unit 403 configured to normalize the probability values of the word mask corresponding to the plural word vectors, so as to obtain a plurality of normalized probability values of the word mask corresponding to the plural word vectors. Correspondingly, in this embodiment, the determining unit 304 is specifically configured to determine the word vector corresponding to each word mask based on the plural normalized probability values of the word mask corresponding to the plural word vectors.

Optionally, in a possible implementation of this embodiment, the word vector parameter matrix 402 may be configured as a pre-trained word vector parameter matrix, or an initialized word vector parameter matrix (i.e., an untrained word vector parameter matrix or a word vector parameter matrix which is not trained completely), which is not limited in this embodiment of the present application.

In an implementation, when the word vector parameter matrix 402 is configured as the initialized word vector parameter matrix, the training unit 305 is specifically configured to train the language model and the initialized word vector parameter matrix based on the word vector corresponding to each word mask until the preset training completion condition is met.

Optionally, in a possible implementation of this embodiment, the language model 303 may be configured as any language model, for example, an ERNIE model.

Optionally, in a possible implementation of this embodiment, the language model 303 may be further configured to perform a natural language processing task after the preset training completion condition is met, so as to obtain a processing result. Correspondingly, referring to Fig. 4 again, the apparatus 300 for training a language model according to the above-mentioned embodiment may further include a fine-tuning unit 404 configured to finely tune parameter values in the language model 303 according to the difference between the processing result and annotated result information.

It should be noted that the method according to the embodiments corresponding to Figs. 1 to 2 may be implemented by the apparatus for training a language model according to the above-mentioned embodiments of Figs. 3 to 4. For detailed description, reference may be made to relevant contents in the embodiments corresponding to Figs. 1 to 2, and the detailed description is not repeated herein.

According to embodiments of the present application, there are also provided an electronic device, a non-transitory computer-readable storage medium storing computer instructions and a computer program product including instructions which, when the program is executed by a computer, cause the computer to carry out the method described above.

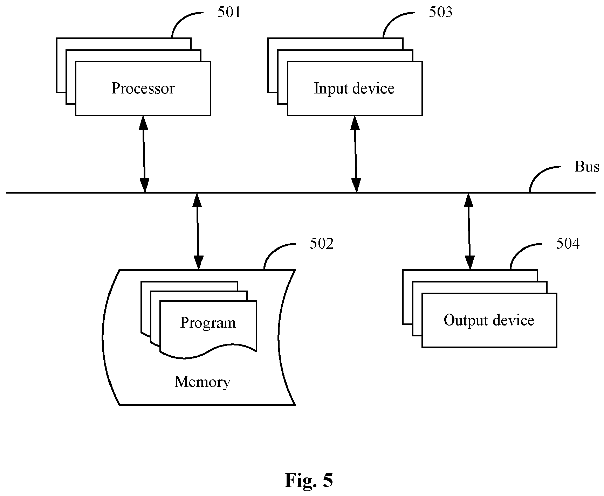

Fig. 5 is a schematic diagram of an electronic device for implementing a method for training a language model according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present application described and/or claimed herein.

As shown in Fig. 5, the electronic device includes one or more processors 501, a memory 502, and interfaces configured to connect the various components, including high-speed interfaces and low-speed interfaces. The various components are interconnected using different buses and may be mounted at a common motherboard or in other manners as desired. The processor may process instructions for execution within the electronic device, including instructions stored in or at the memory to display graphical information for a graphical user interface (GUI) at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 5, one processor 501 is taken as an example.

The memory 502 is configured as the non-transitory computer-readable storage medium according to the present application. The memory stores instructions executable by the at least one processor to cause the at least one processor to perform a method for training a language model according to the present application. The non-transitory computer-readable storage medium according to the present application stores computer instructions for causing a computer to perform the method for training a language model according to the present application.

The memory 502 which is a non-transitory computer-readable storage medium may be configured to store non-transitory software programs, non-transitory computer executable programs and units, such as program instructions/units corresponding to the method for training a language model according to the embodiments of the present application (for example, the pre-training unit 301, the replacing unit 302, the language model 303, the determining unit 304 and the training unit 305 shown in Fig. 3). The processor 501 executes various functional applications and data processing of a server, that is, implements the method for training a language model according to the above-mentioned embodiments, by running the non-transitory software programs, instructions, and units stored in the memory 502.

The memory 502 may include a program storage area and a data storage area, wherein the program storage area may store an operating system and an application program required for at least one function; the data storage area may store data created according to use of the electronic device for implementing the method for training a language model according to the embodiments of the present application, or the like. Furthermore, the memory 502 may include a high-speed random access memory, or a non-transitory memory, such as at least one magnetic disk storage device, a flash memory device, or other non-transitory solid state storage devices. In some embodiments, optionally, the memory 502 may include memories remote from the processor 501, and such remote memories may be connected via a network to the electronic device for implementing the method for training a language model according to the embodiments of the present application. Examples of such a network include, but are not limited to, the Internet, intranets, local area networks, mobile communication networks, and combinations thereof.

The electronic device for the method for training a language model may further include an input device 503 and an output device 504. The processor 501, the memory 502, the input device 503 and the output device 504 may be connected by a bus or other means, and Fig. 5 takes the connection by a bus as an example.

The input device 503 may receive input numeric or character information and generate key signal input related to user settings and function control of the electronic device for implementing the method for training a language model according to the embodiments of the present application, such as a touch screen, a keypad, a mouse, a track pad, a touch pad, a pointing stick, one or more mouse buttons, a trackball, a joystick, or the like. The output device 504 may include a display device, an auxiliary lighting device (for example, an LED) and a tactile feedback device (for example, a vibrating motor), or the like. The display device may include, but is not limited to, an LCD (liquid crystal display), an LED (light emitting diode) display, and a plasma display. In some implementations, the display device may be a touch screen.

Various implementations of the systems and technologies described here may be implemented in digital electronic circuitry, integrated circuitry, ASICs (application specific integrated circuits), computer hardware, firmware, software, and/or combinations thereof. These various implementations may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine-readable medium" and "computer-readable medium" refer to any computer program product, device and/or apparatus (for example, magnetic discs, optical disks, memories, PLDs (programmable logic devices)) for providing machine instructions and/or data to a programmable processor, including a machine readable medium which receives machine instructions as a machine readable signal. The term "machine readable signal" refers to any signal for providing machine instructions and/or data to a programmable processor.

To provide interaction with a user, the systems and technologies described here may be implemented on a computer having: a display device (for example, a CRT (cathode ray tube) or LCD (liquid crystal display) monitor) for displaying information to a user; and a keyboard and a pointing device (for example, a mouse or a trackball) by which a user may provide input to the computer. Other kinds of devices may also be used to provide interaction with a user; for example, feedback provided to a user may be any form of sensory feedback (for example, visual feedback, auditory feedback, or tactile feedback); and input from a user may be received in any form (including acoustic, language or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: an LAN (local area network), a WAN (wide area network) and the Internet.

A computer system may include a client and a server. Generally, the client and the server are remote from each other and interact through the communication network. The relationship between the client and the server is generated by virtue of computer programs which are run on respective computers and have a client-server relationship to each other.

According to the technical solution of the embodiments of the present application, semantic information representation with greater granularity is introduced, the word vectors contain richer semantic information representation compared with character vectors, and the word vectors are modeled directly based on contexts, thus enhancing the process of modeling the word meaning information by the language model and the capacity of the language model to learn the word meaning information.

In addition, with the technical solution of the present application, since the word in the sample text language material is replaced with the word mask to train the language model, the information leakage risk possibly caused by character-based full word coverage may be avoided effectively.

In addition, with the technical solution of the present application, the prediction performance of the language model may be improved effectively.

It should be understood that various forms of the flows shown above may be used and reordered, and steps may be added or deleted. For example, the steps described in the present application may be executed in parallel, sequentially, or in different orders, and are not limited herein as long as the desired results of the technical solution disclosed in the present application may be achieved.

The above-mentioned embodiments are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for training a language model, comprising:
pre-training (101) the language model using preset text language materials in a corpus;
replacing (102) at least one word in a sample text language material with a word mask respectively to obtain a sample text language material comprising at least one word mask;
inputting (103) the sample text language material comprising the at least one word mask into the language model, and outputting a context vector of each of the at least one word mask the language model;
determining (104) a word vector corresponding to each word mask based on the context vector of the word mask and a word vector parameter matrix; and
training (105) the language model based on the word vector corresponding to each word mask until a preset training completion condition is met.

2. The method according to claim 1, wherein the replacing (102) at least one word in a sample text language material with a word mask respectively comprises:
performing word segmentation on the sample text language material, and replacing each of the at least one word in the sample text language material with one word mask based on the word segmentation result.

3. The method according to claim 1, wherein the determining (104) a word vector corresponding to each word mask based on the context vector of the word mask and a word vector parameter matrix comprises:
multiplying the context vector of each word mask by the word vector parameter matrix to obtain probability values of the word mask corresponding to a plurality of word vectors;
normalizing the probability values of the word mask corresponding to the word vectors, so as to obtain a plurality of normalized probability values of the word mask corresponding to the word vectors; and
determining the word vector corresponding to the word mask based on the normalized probability values of the word mask corresponding to the word vectors.

4. The method according to claim 1, wherein the word vector parameter matrix is configured as a pre-trained word vector parameter matrix or an initialized word vector parameter matrix;
the training (105) the language model based on the word vector corresponding to each word mask until a preset training completion condition is met comprises:
training the language model and the initialized word vector parameter matrix based on the word vector corresponding to the word mask until the preset training completion condition is met.

5. The method according to claim 1, wherein the language model comprises an enhanced representation from knowledge Integration (ERNIE) model.

6. The method according to any one of claims 1 to 5, further comprising: after the preset training completion condition is met,
performing (201) a natural language processing task with the trained language model to obtain a processing result; and
finely tuning (202) parameter values in the language model according to the difference between the processing result and annotated result information.

7. An apparatus (300) for training a language model (303), comprising:
a pre-training unit (301) configured to pre-train (101) the language model using preset text language materials in a corpus;
a replacing unit (302) configured to replace (102) at least one word comprised in at least one sample text language material with a word mask respectively to obtain a sample text language material comprising at least one word mask;
the language model (303) configured to receive (103) the sample text language material comprising the word mask, and output a context vector of each of the at least one word mask;
a determining unit (304) configured to determine (104) a word vector corresponding to each word mask based on the context vector of the word mask and a word vector parameter matrix; and
a training unit (305) configured to train (105) the language model based on the word vector corresponding to each word mask until a preset training completion condition is met.

8. The apparatus (300) according to claim 7, further comprising:
a word segmentation unit (401) configured to perform word segmentation on the sample text language material;
wherein the replacing unit (302) is specifically configured to replace each of the at least one word in the sample text language material with one word mask based on the word segmentation result obtained by the word segmentation unit.

9. The apparatus (300) according to claim 7, further comprising:
the word vector parameter matrix (402) configured to be multiplied by the context vector of each word mask to obtain probability values of the word mask corresponding to a plurality of word vectors; and
a normalizing unit (403) configured to normalize the probability values of the word mask corresponding to the word vectors, so as to obtain a plurality of normalized probability values of the word mask corresponding to the word vectors;
wherein the determining unit (304) is specifically configured to determine the word vector corresponding to the word mask based on the normalized probability values of the word mask corresponding to the word vectors.

10. The apparatus (300) according to claim 7, wherein the word vector parameter matrix (402) is configured as a pre-trained word vector parameter matrix or an initialized word vector parameter matrix;
the training unit (305) is specifically configured to train the language model (303) and the initialized word vector parameter matrix based on the word vector corresponding to the word mask until the preset training completion condition is met.

11. The apparatus (300) according to claim 7, wherein the language model (303) comprises an enhanced representation from knowledge Integration (ERNIE) model.

12. The apparatus (300) according to any one of claims 7 to 11, wherein the language model (303) is further configured to perform (201) a natural language processing task after the preset training completion condition is met, so as to obtain a processing result;
the apparatus (300) further comprises:
a fine-tuning unit (404) configured to finely tune (202) parameter values in the language model (303) according to the difference between the processing result and annotated result information.

13. An electronic device, comprising:
at least one processor (501); and
a memory (502) connected with the at least one processor (501) communicatively;
wherein the memory (502) stores instructions executable by the at least one processor (501) to cause the at least one processor (501) to perform the method according to any one of claims 1 to 6.

14. A non-transitory computer-readable storage medium comprising instructions, which, when executed by a computer, cause the computer to carry out the method according to any of claims 1-7.

15. A computer program product comprising instructions which, when the program is executed by a computer, cause the computer to carry out the method according to any of claims 1-7.
